# EUROPEAN PATENT SPECIFICATION

(11) **EP 2 205 056 B1**
(45) Date of publication and mention of the grant of the patent: **01.08.2012**
(21) Application number: 08844021.9
(22) Date of filing: 16.10.2008
(51) Int. Cl.: A01C 23/00, A01M 7/00

(54) **ADAPTIVE FEEDBACK SOURCES FOR APPLICATION CONTROLLERS**
ADAPTIVE RÜCKKOPPLUNGSQUELLEN FÜR ANWENDUNGSSTEUERGERÄTE
SOURCES DE RÉTROACTION ADAPTATIVES POUR DES DISPOSITIFS DE COMMANDE D'APPLICATION

(30) Priority: 30.10.2007 US 928291
(43) Date of publication of application: 14.07.2010
(73) Proprietor: AGCO CORPORATION, Duluth GA 30096-2568 (US)
(72) Inventor: PETERSON, John, Jackson, MN 56143 (US)
(74) Representative: Morrall, Roger
(86) International application number: PCT/IB2008/002744
(87) International publication number: WO 2009/056930

(56) References cited:
- EP-A- 0 864 369
- EP-A- 0 997 064
- US-A- 4 637 547
- US-A- 5 475 614

## Description

The present invention relates generally to spray control methods and systems for controlling a sprayer, particularly, an agricultural sprayer.

Sprayers are widely used in agriculture and horticulture for applying chemicals (e.g., insecticides and fungicides) or fertilizers to crops, to protect the crops from diseases, insects, and to facilitate the growth and harvest of the crops.

Most agriculture/horticulture sprayers are designed to be mounted on, or towed by, a vehicle on the ground, or carried by airplanes or helicopters. These sprayers typically include one or more storage or supply vessel, a left and a right boom or other manifold systems that carry a plurality of geometrically arranged spaced nozzles along its length, a pump for pressurizing and distributing the fluid through pipes or hoses to spray nozzles, and means to control the pump, boom, and spray nozzles.

Control systems for the application of the fertilizer, pesticide, etc, typically comprise a feedback mechanism which exists to provide a source of data for determining differences between the actual state of the spray output and the commanded, or intended, state. For example, a rate controller may transmit a signal to a motor instructing the motor to turn a drive shaft at 5 rpm which corresponds to a fluid delivery rate. A "feedback" device, or sensor(s), monitors the fluid delivery rate and reports a status back to the rate controller, i.e. too fast, too slow, just right. In response to this the controller modifies its output to correct any error based on some predetermined algorithm or calibration.

Currently, two basic categories of feedback controls are used for controlling the fluid delivery of sprayers: (i) flow volume-based closed loop control systems , and (ii) pressure-based closed loop control systems.

Flow volume-based feedback systems measure the flow volume of the substance exiting the machine and feed this signal back to a controller to control the delivery rate. Pressure-based feedback systems monitor the system pressure, calculate an expected flow volume using predetermined data, and feed the information back to a controller to control the delivery rate.

Each of the control systems has its strengths and weaknesses. For example, one weakness of the volume-based system is that a flow meter does not recognize a breakage downstream in a pipe. Therefore the meter may feed back the correct flow but the liquid may not be reaching the desired output nozzle. Secondly, flow meters comprised in the volume-based systems are mechanical devices and therefore have wear and operating limits (high/low flow velocity) that impact their ability to output a stable signal to a controller.

A pressure sensing system is very predictable and works well when the orifice size and material properties remain constant. However, in reality, neither is the case. So, to compensate, the operator is often required to perform a "catch test" wherein he is required to collect the output of a spray nozzle at a given pressure for a given period of time so as to determine the proper "scale factor" to use.

USA patent number US-5,475,614 discloses a fluid delivery control system which is operable in a hybrid mode. Primary feedback control in the hybrid mode is provided using a sensed pressure from a pressure sensor. A sensed flow rate from a flow meter is utilized to provide compensation for the pressure responsive feedback control.

According to a first aspect of the invention there is provided agricultural sprayer apparatus comprising fluid application means, a controller, a flow-based feedback circuit comprising a flow sensor for sensing a flow volume within the fluid application means and a pressure-based feedback circuit comprising a pressure transducer for sensing fluid pressure within the fluid application means, the flow sensor and the pressure transducer being operatively linked to the controller and the fluid application means, wherein the controller controls the fluid application means in response to signals received from the flow sensor and the pressure transducer, and wherein the pressure-based feedback circuit is calibrated by signals received from the flow sensor, characterised in that the flow-based feedback circuit is calibrated by signals received from the pressure transducer.

Advantageously the provision of two feedback mechanisms gives increased flexibility in the manner by which the fluid application means is controlled. Removing the reliance on a single feedback mechanism also increases the reliability and accuracy of the control system.

The controller may receive inputs from the operator through a user interface, and/or various feedback signals from the sensors of the system. After processing these inputs, the controller may send signals to other components of the sprayer, such as, the pump, the storage means, the boom sections, and/or the nozzles, to maintain or change their operating conditions.

Preferably, the controller is arranged to receive inputs from both the flow sensor and the pressure transducer simultaneously.

In order to improve the performance of a sprayer, it is desirable to provide a spray control system for controlling sprayers that allows both manual (the operator of the sprayer) or automatic (the controller) control of the spray system to select a feedback control system, or to switch back and forth between the two above-mentioned feedback control systems, based on the needs of the operation or operation conditions.

Preferably the apparatus further comprises a user interface means operatively linked to the controller which allows an operator to select which feedback circuit from which the controller receives said input signals. Advantageously, this delivers the operator of the sprayer the flexibility of utilizing a flow volume-based closed loop control system, a pressure-based closed loop control system, or both of these closed loop control systems, to control the performance of a sprayer.

In one preferred embodiment, the controller of the present invention may override the choice of the operator in the selection of the feedback control method, for example, where the operating limits of the selected feedback source have been exceeded, or where the selected feedback source has failed (e.g., due to a component failure).

The flow-based feedback circuit is calibrated by signals received from the pressure transducer. Further still the pressure-based feedback circuit is calibrated by signals received from the flow sensor.

According to a second aspect of the invention there is provided a method for controlling an agricultural sprayer comprising fluid application means for the application of a fluid to a crop field, the method comprising measuring a flow volume within the fluid application means, measuring a fluid pressure within the fluid application means, controlling the fluid application means in response to the measured flow volume and fluid pressure, and transmitting the measured fluid pressure to a controller via a pressure-based feedback circuit which is calibrated by receiving a signal indicative of the measured flow volume, characterised in that the method further comprises the step of transmitting the measured (flow volume to a controller via a flow-based feedback circuit which is calibrated by receiving a signal indicative of the measured fluid pressure.

In such a method the fluid application means is preferably controller by a controller which receives inputs from both a flow sensor and a pressure transducer. The inputs may be electrical signals transmitted using wired or wireless technology from the sensors to the controllers. The signals are representative of the measured flow volume or pressure and may be digital or analogue in nature.

In a preferred arrangement the controller may switch the source of input from the flow sensor to the pressure transducer in response to the meeting of a pre-determined condition. For example, the pre-determined condition may be a failure of the flow sensor or, alternatively, may be the input from the flow sensor exceeding a pre-determined threshold which may be an indication that the measurement is inaccurate and thus unreliable. By switching to the alternative feedback mechanism automatically, the reliability of the control system can be increased.

Conversely the controller may switch the source of input from the pressure transducer to the flow sensor in response to the meeting of a pre-determined condition. For example, this may include a failure of the pressure transducer or the input from the pressure transducer exceeding a pre-determined threshold.

Other features and advantages of the present invention will become apparent from the following detailed description. It should be understood, however, that the detailed description and the specific examples, while indicating the preferred embodiments of the present invention, are given by way of illustration only, in which:

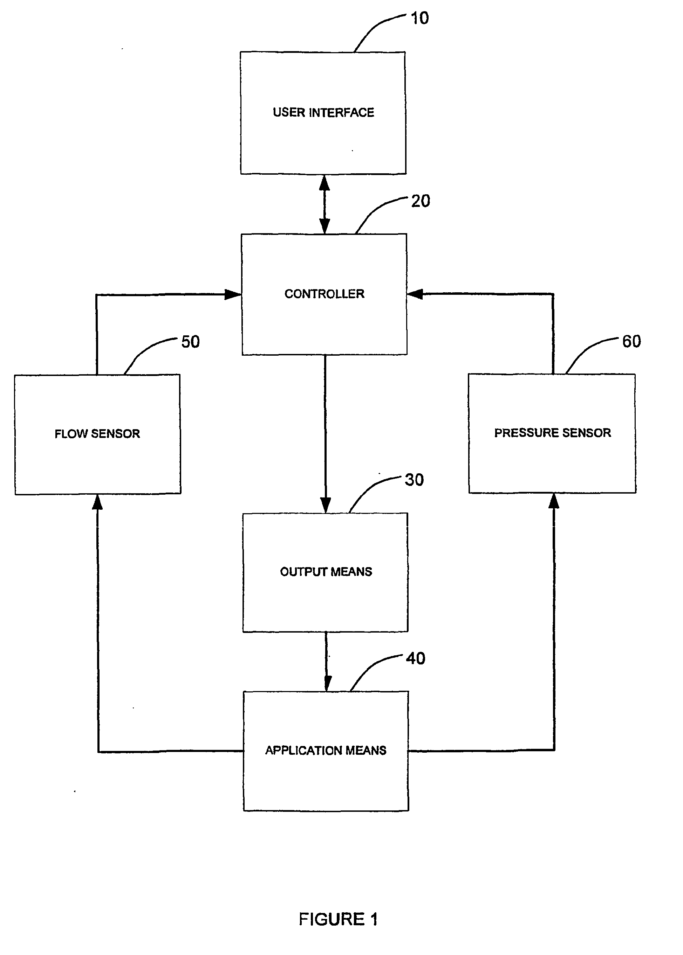

Figure 1 shows a schematic representation of a spray control system in accordance with a preferred embodiment of the present invention.

As used herein and in the appended claims, the singular forms "a," "an," and "the" include plural references, unless the content clearly dictates otherwise. Thus, for example, reference to "a sensor" includes a plurality of such sensors and equivalents thereof known to those skilled in the art, and reference to "the controller" is a reference to one or more such controllers and equivalents thereof known to those skilled in the art, and so forth.

The present invention relates generally to methods and systems for controlling the performance of sprayers, which offer the flexibility of controlling the performance of sprayers utilizing feedback signals from both flow sensors and pressure transducers, or switching to a second feedback control system where the designated feedback control system has failed. In various embodiments of the present invention, the spray system may perform a continuous calibration by running both flow-based and pressure-based feedback controlling systems. Under these circumstances, because the system is constantly in a relative state of calibration, switching hack and forth between feedback sources does not impact the accuracy of the rate at which a substance of interest is applied.

In one aspect, the spray control system of the present invention may include, without limitation, a controller, a plurality of sensors and feedback means, and an output means for controlling the application system of the sprayer. The controller may receive inputs from the operator through a user interface, and/or various feedback signals from the sensors of the system (e.g., a flow meter, or a pressure transducer). After processing these inputs, the controller may send signals to other components of the sprayer, such as, the pump, the storage means, the boom sections, and/or the nozzles, to maintain or change their operating conditions. In various embodiments of the present invention, the controller may override the choice of the operator in the selection of the feedback control method, for example, where the operating limits of the selected feedback source have been exceeded, or where the selected feedback source has failed (e.g., due to a component failure).

Figure 1 shows a representative schematic representation of a spray control system in accordance with one embodiment of the present invention. The spray control system is included on an agricultural sprayer (not shown) used for the application of fluid material to a crop field. In this example the sprayer is a self-propelled unit which comprises an engine. However, it should be appreciated that the sprayer apparatus may include a sprayer which is trailed behind, or mounted to, a tractor. In this case, part of the control system in accordance with the invention may be installed on the tractor wherein said part is in communication with the sprayer via a communications bus.

The sprayer comprises application means 40 of a known arrangement, the details of which are not essential to the understanding of the invention. In brief, the application means includes a boom assembly having a plurality of spray nozzles affixed to a transverse boom in a spaced arrangement. Each nozzle is connected to a fluid delivery system which delivers, under pressure created by a pump, fluid stored in a tank to each nozzle by a network of pipes. The fluid which is applied to the field by each nozzle, or group of nozzles, is regulated by respective valves included in the network of pipes. In addition to the regulating orifices of the respective valves, the rate at which fluid is applied is also dependent upon the pressure of the fluid.

The valves and pump, and thus the fluid application rate, are controlled by a controller 20 via a communications bus represented generally by output means 30 in Figure 1. The controller 20 is a computational device comprising a programmable means, a calculation means, a memory, and/or combinations thereof, and receives inputs/instructions from a user interface 10. Controllers and user interfaces suitable for the purposes of the present invention are known in the art. For example, a user interface may include, without limitation, a LCD panel, a touch screen, a keypad, or a scrolling device.

The application means 40 may be programmed and calibrated by an operator of the sprayer using user interface 10, controller 20, and output means 30.

The spray control system further comprises two feedback circuits which serve to maintain a reliable and accurate application of the fluid to the field. Each circuit senses the status of the flow within the fluid delivery system and/or nozzles and feeds this information back to the controller 20.

A first feedback circuit is flow-based and comprises at least one flow sensor 50 disposed in a pipe of the fluid delivery system. During operation, the flow sensor 50 measures the volume of flow over a period of time to determine the flow rate. Alternatively, the flow sensor may determine the instantaneous flow rate within the pipe. This measurement is then converted to an electrical signal and communicated to the controller 20.

A second feedback circuit is pressure-based and comprises at least one pressure transducer 60 disposed in a pipe of the fluid delivery system (typically in the same pipe as the flow sensor 50). During operation, the pressure transducer 60 measures the instantaneous fluid pressure within the pipe. This measurement is then converted to an electrical signal and communicated to the controller 20 which then converts the signal to one which is indicative of the instantaneous flow rate using a predetermined algorithm and data representing the orifice size of the relevant regulating valve. Alternatively, the conversion may be executed by circuitry located at or near the transducer.

Flow sensors and pressure transducers suitable for the purposes of the present invention are well known in the art.

Therefore, there are two mechanisms to provide flow-rate data to the controller 20. In response to the received signals, the controller 20 adjusts the valves and pumps accordingly so as to adjust the output flow rate. By employing two mechanisms which use different measuring techniques, the control of the applied fluid delivers greater accuracy and robustness.

The operator of the sprayer through user interface 10 may instruct the spray control system to use one or both feedback signals. The operator may also set various operating limits for the selected feedback source using user interface 10. Furthermore, controller 20 may automatically switch to the other feedback control system when the operating limits of the selected feedback source have been exceeded, or when the selected feedback source has failed (e.g., without limitation, component failure and broken wire).

The application means 40 may be further calibrated and controlled by controller 20 that utilizes feedback signals from flow sensor 50 and/or pressure transducer 60.

During operation the flow-based feedback circuit can be calibrated by the pressure-based feedback circuit, and vice versa. Such a process is preferably continual but may be carried out periodically. In other words, the accuracy of each feedback circuit is validated by measurements carried out by the other fcedback circuit. Once this "co-calibration" is achieved the spray control system can automatically compensate/adjust for component failure or operational situations where one source is preferred over another.

Whereas this invention has been described in detail with particular reference to preferred embodiments, it is understood that variations and modifications can be effected within the scope of the invention, as described herein before and as defined in the appended claims. The corresponding structures, material, acts, and equivalents of all means plus function elements, if any, in the claims below are intended to include any structure, material, or acts for performing the functions in combination with other claimed elements as specifically claimed.

## Claims

1. Agricultural sprayer apparatus comprising fluid application means (40), a controller (20), a flow-based feedback circuit comprising a flow sensor (50) for sensing a flow volume within the fluid application means (40) and a pressure-based feedback circuit comprising a pressure transducer (60) for sensing fluid pressure within the fluid application means (40), the flow sensor and the pressure transducer being operatively linked to the controller and the fluid application means (40), wherein the controller (20) controls the fluid application means (40) in response to signals received from the flow sensor (50) and the pressure transducer (60), and wherein the pressure-based feedback circuit is calibrated by signals received from the flow sensor (50), **characterised in that** the flow-based feedback circuit is calibrated by signals received from the pressure transducer (60).

2. A sprayer according to Claim I, wherein the controller (20) is arranged to receive inputs from both the flow sensor (50) and the pressure transducer (60) simultaneously.

3. A sprayer according to Claim 1 or 2, further comprising a user interface means (10) operatively linked to the controller (20) which allows an operator to select which feedback circuit from which the controlled (20) receives said input signals.

4. A sprayer according to any preceding claim, wherein the sprayer is a multi-section boom sprayer.

5. A method for controlling an agricultural sprayer comprising fluid application means (40) for the application of a fluid to a crop field, the method comprising measuring a flow volume within the fluid application means (40), measuring a fluid pressure within the fluid application means, controlling the fluid application means in response to the measured flow volume and fluid pressure, and transmitting the measured fluid pressure to a controller (20) via a pressure-based feedback circuit which is calibrated by receiving a signal indicative of the measured flow volume, **characterised in that** the method further comprises the step of transmitting the measured flow volume to a controller via a flow-based feedback circuit which is calibrated by receiving a signal indicative of the measured fluid pressure.

6. A method according to Claim 5, wherein the fluid application means (40) is controlled by a controller (20) which receives inputs from both a flow sensor (50) and a pressure transducer (60).

7. A method according to Claim 6, wherein the controller (20) switches the source of input from the flow sensor (50) to the pressure transducer (60) in response to the meeting of a pre-determined condition.

8. A method according to Claim 7, wherein the pre-determined condition is a failure of the flow sensor (50) or the input from the flow sensor (50) exceeding a pre-determined threshold.

9. A method according to any one of Claims 6, 7 or 8, wherein the controller (20) switches the source of input from the pressure transducer (60) to the flow sensor (50) in response to the meeting of a pre-determined condition.

10. A method according to Claim 9, wherein the pre-determined condition is a failure of the pressure transducer (60) or the input from the pressure transducer (60) exceeding a pre-determined threshold.

11. A method according to any one of Claims 5 to 10, wherein the measured fluid pressure is converted to an input which is representative of a flow volume using a predetermined algorithm.

## Patentansprüche

1. Landwirtschaftliche Sprayvorrichtung mit einem Applikationsorgan (40) für Fluid, einer Regelung (20), einem flussbasiertem Rückführkreis mit einem Flusssensor (50) zum Sensieren eines Flussvolumens in dem Applikationsorgan (40) und einem druckbasierten Rückführkreis mit einem Druckgeber (60) zum Sensieren des Fluiddrucks in dem Applikationsorgan (40), wobei der Flusssensor und der Druckgeber wirkungsmäßig mit der Regelung und dem Applikationsorgan (40) verbunden sind und die Regelung (20) das Applikationsorgan (40) regelt in Abhängigkeit von Signalem, die von dem Flusssensor (50) und dem Druckgeber (60) empfangen werden, und wobei der druckbasierte Rückführkreis durch Signale kalibriert ist oder wird, die von dem Flusssensor (50) empfangen werden, **dadurch gekennzeichnet, dass** der flussbasierte Rückführkreis durch Signale kalibriert ist oder wird, die von dem Druckgeber (60) empfangen werden.

2. Sprayvorrichtung nach Anspruch 1, **dadurch gekennzeichnet, dass** die Regelung (20) geeignet zum simultanen Empfangen von Eingangsgrößen sowohl von dem Flusssensor (50) als auch von dem Druckgeber (60) gestaltet oder angeordnet ist.

3. Sprayvorrichtung nach Anspruch 1 oder 2, **dadurch gekennzeichnet, dass** ein User-Interface-Organ (10) vorhanden ist, welches wirkungsmäßig mit der Regelung (20) verbunden ist, welches es einem Benutzer ermöglicht, einen Rückführkreis auszuwählen, von dem die Regelung (20) die Eingangssignale empfängt.

4. Sprayvorrichtung nach einem der vorhergehenden Ansprüche, **dadurch gekennzeichnet, dass** die Sprayvorrichtung eine Ausleger-Sprayvorrichtung mit mehreren Abschnitten ist.

5. Verfahren zur Regelung einer landwirtschaftlichen Sprayvorrichtung mit einem Applikationsorgan (40) für Fluid zur Applikation eines Fluids auf ein Erntegut-Feld, wobei das Verfahren ein Messen eines Flussvolumens in dem Applikationsorgan (40), ein Messen eines Fluiddrucks in dem Applikationsorgan, ein Regeln des Applikationsorgans in Abhängigkeit des gemessenen Flussvolumens und des Fluiddrucks und ein Übertragen des gemessenen Fluiddrucks zu einer Regelung (20) über einen druckbasierten Rückführkreis, der kalibriert ist oder wird durch Empfangen eines Signals, welches das gemessene Flussvolumen indiziert, aufweist, **dadurch gekennzeichnet, dass** das Verfahren den Verfahrensschritt eines Übertragens des gemessenen Flussvolumens an eine Regelung über einen flussbasierten Rückführkreis beinhaltet, der unter Empfang eines Signals, welches den gemessene Fluiddruck indiziert, kalibriert ist oder wird.

6. Verfahren nach Anspruch 5, **dadurch gekennzeichnet, dass** das Applikationsorgan (40) für das Fluid durch eine Regelung (20) geregelt wird, die Eingangsgrößen sowohl von einem Flusssensor (50) als auch von einem Druckgeber (60) empfängt.

7. Verfahren nach Anspruch 6, **dadurch gekennzeichnet, dass** die Regelung (20) in Abhängigkeit von dem Vorhandensein oder Erreichen eines vorbestimmten Zustands die Eingangsquelle von dem Flusssensor (50) zu dem Druckgeber (60) umschaltet.

8. Verfahren nach Anspruch 7, **dadurch gekennzeichnet, dass** der vorbestimmte Zustand ein Versagen des Flusssensors (50) oder das Überschreiten eines vorbestimmten Schwellwertes durch die Eingangsgröße von dem Flusssensor (50) ist.

9. Verfahren nach einem der Ansprüche 6, 7 oder 8, **dadurch gekennzeichnet, dass** die Regelung (20) in Abhängigkeit von dem Vorhandensein oder Erreichen eines vorbestimmten Zustands die Eingangsquelle von dem Druckgeber (60) zu dem Flusssensor (50) umschaltet.

10. Verfahren nach Anspruch 9, **dadurch gekennzeichnet, dass** der vorbestimmte Zustand ein Versagen des Druckgebers (60) oder das Überschreiten eines vorbestimmten Schwellwerts durch die Eingangsgröße von dem Druckgeber (60) ist.

11. Verfahren nach einem der Ansprüche 5 bis 10, **dadurch gekennzeichnet, dass** der gemessene Fluiddruck unter Verwendung eines vorbestimmten Algorithmus umgewandelt wird in einer Eingangsgröße, welche ein Flussvolumen repräsentiert.

## Revendications

1. Dispositif de pulvérisation agricole comprenant un moyen d'application de fluide (40), une unité de commande (20), un circuit d'asservissement basé sur le débit comprenant un capteur de débit (50) destiné à détecter un débit volumique à l'intérieur du moyen d'application de fluide (40) et un circuit d'asservissement basé sur la pression comprenant un transducteur de pression (60) destiné à détecter une pression de fluide à l'intérieur du moyen d'application de fluide (40), le capteur de débit et le transducteur de pression étant couplés de manière opérationnelle à l'unité de commande et au moyen d'application de fluide (40), dans lequel l'unité de commande (20) commande le moyen d'application de fluide (40) en réponse à des signaux reçus à partir du capteur de débit (50) et du transducteur de pression (60), et dans lequel le circuit d'asservissement basé sur la pression est étalonné par des signaux reçus à partir du capteur de débit (50), **caractérisé en ce que** le circuit d'asservissement basé sur le débit est étalonné par des signaux reçus à partir du transducteur de pression (60).

2. Pulvérisateur selon la revendication 1, dans lequel l'unité de commande (20) est agencée afin de recevoir de manière simultanée des entrées à la fois du capteur de débit (50) et du transducteur de pression (60).

3. Pulvérisateur selon la revendication 1 ou 2, comprenant, en outre, un moyen formant interface d'utilisateur (10), couplé de manière opérationnelle à l'unité de commande (20), qui permet à un opérateur de sélectionner le circuit d'asservissement à partir duquel l'unité de commande (20) reçoit lesdits signaux d'entrée.

4. Pulvérisateur selon l'une quelconque des revendications précédentes, dans lequel le pulvérisateur est un pulvérisateur à perche à sections multiples.

5. Procédé de commande d'un pulvérisateur agricole comprenant un moyen d'application de fluide (40) destiné à assurer l'application d'un fluide sur un champ de culture, le procédé comprenant la mesure d'un débit volumique à l'intérieur du moyen d'application de fluide (40), la mesure d'une pression de fluide à l'intérieur du moyen d'application de fluide, la commande du moyen d'application de fluide en réponse au débit volumique et à la pression de fluide mesurés, et la transmission de la pression de fluide mesurée à une unité de commande (20) par l'intermédiaire d'un circuit d'asservissement basé sur la pression qui est étalonné en recevant un signal représentatif du débit volumique mesuré, **caractérisé en ce que** le procédé comprend, en outre, l'étape de transmission du débit volumique mesuré à une unité de commande par l'intermédiaire d'un circuit d'asservissement basé sur le débit qui est étalonné en recevant un signal représentatif de la pression de fluide mesurée.

6. Procédé selon la revendication 5, dans lequel le moyen d'application de fluide (40) est commandé par une unité de commande (20) qui reçoit des entrées à la fois à partir d'un capteur de débit (50) et d'un transducteur de pression (60).

7. Procédé selon la revendication 6, dans lequel l'unité de commande (20) commute la source d'entrée à partir du capteur de débit (50) pour le transducteur de pression (60) en réponse à l'atteinte d'une condition prédéterminée.

8. Procédé selon la revendication 7, dans lequel la condition prédéterminée est une défaillance du capteur de débit (50) ou le dépassement d'un seuil prédéterminé par l'entrée à partir du capteur de débit (50).

9. Procédé selon l'une quelconque des revendications 6, 7 ou 8, dans lequel l'unité de commande (20) commute la source d'entrée à partir du transducteur de pression (60) pour le capteur de débit (50) en réponse à l'atteinte d'une condition prédéterminée.

10. Procédé selon la revendication 9, dans lequel la condition prédéterminée est une défaillance du transducteur de pression (60) ou le dépassement d'un seuil prédéterminé par l'entrée à partir du transducteur de pression (60).

11. Procédé selon l'une quelconque des revendications 5 à 10, dans lequel la pression de fluide mesurée est transformée en une entrée qui est représentative d'un débit volumique en utilisant un algorithme prédéterminé.
